# EUROPÄISCHE PATENTSCHRIFT

(11) **EP 3 043 454 B1**
(45) Veröffentlichungstag und Bekanntmachung des Hinweises auf die Patenterteilung: **08.08.2018**
(21) Anmeldenummer: 15199576.8
(22) Anmeldetag: 11.12.2015
(51) Int. Cl.: H02K 7/102, F16D 59/02

(54) **FAHRANTRIEB EINES FLURFÖRDERZEUGS MIT EINEM ELEKTROMOTOR UND MIT EINER FEDERSPEICHERBREMSEINRICHTUNG**
DRIVE ASSEMBLY OF AN INDUSTRIAL TRUCK WITH AN ELECTRIC MOTOR AND A SPRING-LOADED BRAKING DEVICE
ENTRAINEMENT D'UN CHARIOT DE MANUTENTION EQUIPE D'UN MOTEUR ELECTRIQUE ET D'UN DISPOSITIF DE FREINAGE A RESSORT

(30) Priorität: 08.01.2015 DE 102015100176
(43) Veröffentlichungstag der Anmeldung: 13.07.2016
(73) Patentinhaber: Linde Material Handling GmbH, 63743 Aschaffenburg (DE)
(72) Erfinder: PEDELUCQ, Julien, 83530 Availles-en-Chatellerault (FR)
(74) Vertreter: Patentship Patentanwaltsgesellschaft mbH

(56) Entgegenhaltungen:
- EP-A1- 2 006 563
- WO-A1-2012/034624
- DE-A1- 19 719 990
- DE-A1-102006 004 065
- JP-A- 2007 143 255
- US-A- 2 462 017
- US-A- 2 506 028

## Beschreibung

Die Erfindung betrifft einen Fahrantrieb eines Flurförderzeugs mit einem Elektromotor, der in einem Motorgehäuse des Fahrantriebs angeordnet ist und eine Abtriebswelle aufweist, und mit einer Federspeicherbremseinrichtung, die auf die Abtriebswelle des Elektromotors wirkt, wobei die Federspeicherbremseinrichtung einen mit der Abtriebswelle drehfest verbundenen Bremsrotor aufweist und eine axial verschiebbare Druckplatte aufweist, wobei die Druckplatte von einer Federeinrichtung in Richtung einer Bremsstellung der Federspeicherbremseinrichtung und von einer der Federeinrichtung entgegenwirkenden Lüfteinrichtung in Richtung einer Lösestellung der Federspeicherbremseinrichtung beaufschlagt ist, wobei die Abtriebswelle in einem Lagerschild des Motorgehäuses mittels einer Lagereinrichtung drehbar gelagert ist und die Federspeicherbremseinrichtung einen Bremsstator aufweist, gegen den der Bremsrotor mittels der axial verschiebbaren Druckplatte beaufschlagbar ist, wobei der Bremsrotor zwischen der Druckplatte und dem Bremsstator angeordnet ist.

Ein gattungsgemäßer Fahrantrieb ist aus der EP 2 006 563 A1 bekannt.

Aus der WO 2012/034624 A1 ist ein Elektromotor bekannt, der eine Abtriebswelle aufweist und mit einer Federspeicherbremseinrichtung versehen ist, die auf die Abtriebswelle des Elektromotors wirkt, wobei die Federspeicherbremseinrichtung einen mit der Abtriebswelle drehfest verbundenen Bremsrotor aufweist und eine axial verschiebbare Druckplatte aufweist, wobei die Druckplatte von einer Federeinrichtung in Richtung einer Bremsstellung der Federspeicherbremseinrichtung und von einer der Federeinrichtung entgegenwirkenden Lüfteinrichtung in Richtung einer Lösestellung der Federspeicherbremseinrichtung beaufschlagt ist, wobei die Abtriebswelle in einem Lagerschild des Motorgehäuses mittels einer Lagereinrichtung drehbar gelagert ist und die Federspeicherbremseinrichtung einen Bremsstator aufweist, gegen den der Bremsrotor mittels der axial verschiebbaren Druckplatte beaufschlagbar ist, wobei der Bremsrotor zwischen der Druckplatte und dem Bremsstator angeordnet ist und axial verschiebbar auf der Abtriebswelle des Elektromotors angeordnet ist. Die Federspeicherbremseinrichtung ist an den Lagerschild des Elektromotors angebaut.

Bei Flurförderzeugen werden elektrische Fahrantriebe eingesetzt, die einen Elektromotor als Fahrmotor aufweisen. Um das Flurförderzeug im Stillstand halten zu können, werden Federspeicherbremsen als Feststellbremsen eingesetzt. Derartige Federspeicherbremsen stehen mit der Abtriebswelle des Elektromotors in Wirkverbindung und arretieren in der Bremsstellung die Abtriebswelle.

Hierzu ist es bekannt, eine Federspeicherbremseinrichtung an das Motorgehäuse des Fahrantriebs anzubauen, beispielsweise an der Oberseite des Motorgehäuses, derart, dass ein mit der Abtriebswelle in Wirkverbindung stehender Bremsrotor, beispielsweise eine Bremsscheibe, zwischen dem Motorgehäuse und der Federspeicherbremseinrichtung angeordnet ist und in der Bremsstellung von Außen gegen das Motorgehäuse des Fahrantriebs gedrückt wird. Bei einem derartigen Fahrantrieb ist jedoch nachteilig, dass die Federspeicherbremseinrichtung für die Federeinrichtung und die Lüfteinrichtung ein eigenes Gehäuse benötigt, das an dem Motorgehäuse zu befestigen ist, so dass sich für den Anbau der Federspeicherbremseinrichtung ein hoher Bauaufwand ergibt. Zudem weist die Federspeichereinrichtung aufgrund des eigenständigen Gehäuses einen hohen Bauraumbedarf auf, der zu einem entsprechend hohen Bauraumbedarf des Fahrantriebs führt. Der Bauraumbedarf wird weiterhin durch die zwischen dem Motorgehäuse und dem Gehäuse der Federspeicherbremseinrichtung angeordnete Bremsscheibe noch weiter erhöht. Zudem ergibt sich bei einem derartigen Fahrantrieb bei einem Verschleiß des Bremsrotors ein hoher Wartungsaufwand für das Nachstellen der Federspeicherbremse, da mehrere Schrauben, in der Regel drei Schrauben, mittels denen das Gehäuse der Federspeicherbremseinrichtung an dem Motorgehäuse des Fahrantriebs befestigt ist, gleichzeitig nachgestellt werden müssen. Sofern ein Drehzahlsensor vorgesehen ist, erhöht sich der Bauaufwand des Fahrantriebs weiter, da ein zusätzliches Sensorrad, das mit der Abtriebswelle verbunden ist, erforderlich ist.

Aus der DE 101 03 969 A1 ist ein Fahrantrieb bekannt, bei dem die Federeinrichtung und die als Spule ausgebildete Lüfteinrichtung der Federspeicherbremseinrichtung in dem Motorgehäuse des Fahrantriebs angeordnet sind. Bei dem aus der DE 101 03 969 A1 bekannten Fahrantrieb umfasst die Federspeicherbremseinrichtung einen mit der Abtriebswelle des Elektromotors drehfest und axialfest verbundenen Bremskörper, gegen den eine von der Federeinrichtung beaufschlagte Druckplatte gedrückt wird. In der Bremsstellung der Federspeichereinrichtung erzeugt die Federeinrichtung eine als Druckkraft ausgebildete Bremskraft, mittels der die Druckplatte an den Bremsrotor angedrückt wird. Da der Bremsrotor, um die Abtriebswelle in der Bremsstellung der Federspeicherbremseinrichtung arretieren zu können, an der Abtriebswelle axialfest befestigt sein muss, ist bei dem aus der DE 101 03 969 A1 bekannten Fahrantrieb nachteilig, dass eine Lagereinrichtung der Abtriebswelle, mittels der die Abtriebswelle des Elektromotors im Motorgehäuse drehbar gelagert ist, in der Bremsstellung der Federspeicherbremseinrichtung die Bremskraft am Motorgehäuse abstützten muss, so dass sich ein entsprechend hoher Bauaufwand für die Lagereinrichtung der Abtriebswelle ergibt.

Der vorliegenden Erfindung liegt die Aufgabe zugrunde, einen Fahrantrieb zur Verfügung zu stellen, bei dem die Federspeicherbremseinrichtung einen geringen zusätzlichen Bauaufwand und Bauraumbedarf verursacht und bei dem die Bremskraft der Federspeicherbremseinrichtung nicht auf die Lagereinrichtung der Abtriebswelle wirkt.

Diese Aufgabe wird erfindungsgemäß dadurch gelöst, dass der Bremsrotor axial verschiebbar auf der Abtriebswelle des Elektromotors angeordnet ist und die Federspeicherbremseinrichtung in den Lagerschild des Motorgehäuses eingebaut ist, wobei der Bremsstator als Abschlussdeckel des Lagerschildes ausgebildet ist, wobei die Lüfteinrichtung, die Federeinrichtung, die Druckplatte und der Bremsrotor im Lagerschild des Motorgehäuses angeordnet sind. Erfindungsgemäß ist somit die Federspeicherbremseinrichtung vollständig in den Lagerschild des Motorgehäuses und somit in das Motorgehäuse eingebaut und integriert. Dadurch ergibt sich eine bauraumsparende Bauweise und ein geringer Bauraumbedarf, da die Federspeicherbremseinrichtung kein eigenständiges Gehäuse benötigt, das an dem Motorgehäuse zu befestigen ist. Bei der erfindungsgemäßen Federspeicherbremseinrichtung wird in der Bremsstellung der axial verschiebbare Bremsrotor über die Druckplatte von der Federeinrichtung von Innen in Anlage an den Bremsstator gedrückt, der den Abschlussdeckel des Lagerschildes und somit des Motorgehäuses bildet. In der Bremsstellung der Federspeicherbremseinrichtung wird somit die von der Druckkraft der Federeinrichtung gebildete Bremskraft direkt an dem Bremsstator und somit am Motorgehäuse abgestützt, so dass die Lagereinrichtung der Abtriebswelle nicht von der Bremskraft beaufschlagt sind. Dadurch ergibt sich ein geringer Bauaufwand für die Lagereinrichtung, der zu weiteren Vorteilen hinsichtlich eines geringen Bauaufwandes und Bauraumbedarfs des Fahrantriebs führt.

Gemäß der Erfindung sind die Lüfteinrichtung, die Federeinrichtung, die Druckplatte und der Bremsrotor im Lagerschild des Motorgehäuses angeordnet. Der als Abschlussdeckel des Lagerschildes und somit des Motorgehäuses ausgebildete Bremsstator begrenzt somit in dem Lagerschild einen Einbauraum für die Lüfteinrichtung, die Federeinrichtung, die Druckplatte und den Bremsrotor der Federspeichereinrichtung. Hierdurch wird weiterhin bei entferntem Bremsstator eine einfache Montage und Demontage der Federspeicherbremseinrichtung erzielt.

Der Lagerschild kann einstückig mit dem Motorgehäuse ausgebildet sein.

Alternativ kann der Lagerschild als eigenständiges Bauteil ausgebildet sein, das an dem Motorgehäuse befestigt ist.

Gemäß einer vorteilhaften Ausgestaltungsform der Erfindung ist die Federspeicherbremseinrichtung als elektrisch lösbare Federspeicherbremse ausgebildet, wobei die Lüfteinrichtung als Elektromagnet und die Druckplatte als Ankerplatte ausgebildet ist. Mit einer elektrisch lösbaren Federspeicherbremse, bei der der Elektromagnet in den Lagerschild des Motorgehäuses eingebaut ist, kann bei einem Fahrantrieb eines Flurförderzeugs mit geringem Bauaufwand und Bauraumbedarf eine Feststellbremse zur Verfügung gestellt werden.

Für den Einbau des Elektromagnet der Federspeicherbremseinrichtung in den Lagerschild des Motorgehäuses ergibt sich ein einfacher Bauaufwand, wenn gemäß einer Ausführungsform der Erfindung der Lagerschild mit einer Ringnut versehen ist, in der eine Spule des Elektromagnet angeordnet ist.

Für die Federeinrichtung und den Einbau der Federeinrichtung der Federspeicherbremseinrichtung in den Lagerschild des Motorgehäuses ergibt sich ein einfacher Bauaufwand, wenn gemäß einer Ausführungsform der Erfindung die Federeinrichtung mehrere konzentrisch zur Abtriebswelle angeordnete Druckfedern aufweist, wobei der Lagerschild für jede Druckfeder mit einer Aufnahmebohrung versehen ist.

Gemäß einer vorteilhaften Ausführungsform der Erfindung ist der Bremsstator an dem Lagerschild mittels einer Verschraubung befestigt. Mit einer von mehreren Befestigungsschrauben gebildeten Verschraubung kann der als Abschlussdeckel ausgebildete Bremsstator auf einfache Weise an dem Lagerschild und somit dem Motorgehäuse befestigt werden.

Besondere Vorteile ergeben sich, wenn gemäß einer Ausführungsform zwischen dem Lagerschild und dem Bremsstator ein Gewinde ausgebildet ist, mittels dem der Bremsstator auf den Lagerschild aufschraubbar ist. Der als Abschlussdeckel ausgebildete Bremsstator kann somit über das Gewinde direkt auf den Lagerschild aufgeschraubt bzw. in den Lagerschild eingeschraubt werden. Hierdurch wird eine einfache Wartung der Federspeicherbremseinrichtung erzielt, da bei einem Verschleiß des Bremsrotors durch entsprechendes Einschrauben des Bremsstators in den Lagerschild die Federspeicherbremseinrichtung auf einfache Weise nachgestellt werden kann, um den Verschleiß des Bremsrotors zu kompensieren.

Gemäß einer vorteilhaften Weiterbildung der Erfindung ist an dem Lagerschild ein Aufnehmer eines Drehzahlsensors angeordnet, der mit einer Markierung des Bremsrotors zusammenwirkt. Hierdurch wird bei einem Fahrantrieb mit einem die Drehzahl der Abtriebswelle ermittelten Drehzahlsensor der Bauaufwand und der Bauraumbedarf weiter verringert, da der mit der Markierung versehene Bremsrotor einen Impulsgeber und somit ein Sensorrad für den Aufnehmer des Drehzahlsensors bildet, so dass kein eigenständiges Sensorrad für den Drehzahlsensor erforderlich ist, das mit der Abtriebswelle drehfest verbunden ist.

Hinsichtlich eines wartungsfreundlichen Aufbaus der Federspeicherbremseinrichtung ergeben sich besondere Vorteile, wenn an der Außenfläche des Lagerschildes im Bereich des Bremsrotors eine Wartungsöffnung zur Ermittlung des Verschleißes des Bremsrotors ausgebildet ist. Die Wartungsöffnung im Lagerschild bildet somit ein Fenster, durch das der Verschleiß des Bremsrotors auf einfache Weise ermittelt werden kann.

Vorteilhafterweise ist die Federspeicherbremseinrichtung als Feststellbremse des Flurförderzeugs ausgebildet.

Das Flurförderzeug ist als Lagertechnikflurförderzeug ausgebildet. Mit dem erfindungsgemäßen Fahrantrieb kann bei einem Lagertechnikflurförderzeug, beispielsweise einem Niederhubwagen, einem Hochhubwagen, einem Kommissionierer, einem Schubmaststapler, einem Regalstapler, einem Schmalgangstapler, oder einem Elektro-Schlepper, mit geringem Bauaufwand und Bauraumbedarf eine elektrisch lösbare Feststellbremse zur Verfügung gestellt werden, die in das Motorgehäuse des Fahrantriebs eingebaut und integriert ist.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Fahrantriebs in einem Längsschnitt und
- Figur 2: zweite Ausführungsform eines erfindungsgemäßen Fahrantriebs in einem Längsschnitt.

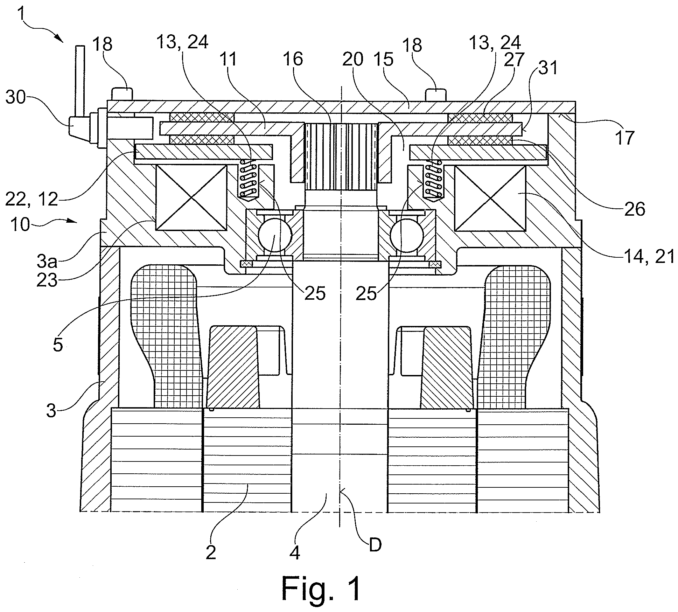

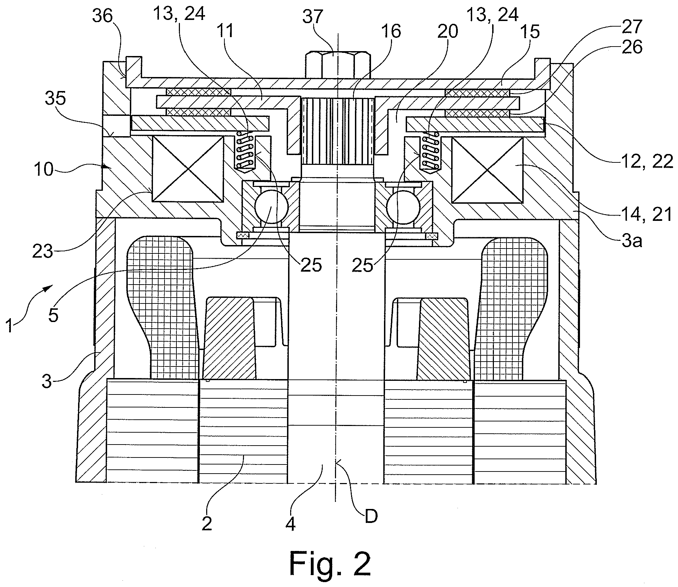

In den Figuren 1 und 2 ist jeweils ein erfindungsgemäßer Fahrantrieb 1 eines Flurförderzeugs, beispielsweise eines Lagertechnikflurförderzeugs, in einem Längsschnitt dargestellt. Gleiche Bauteile sind mit gleichen Bezugsziffern versehen.

Der Fahrantrieb 1 umfasst einen Elektromotor 2, der in einem Motorgehäuse 3 des Fahrantriebs 1 angeordnet ist. Der Elektromotor 2 umfasst eine Abtriebswelle 4, die im Motorgehäuse 3 mittels einer Lagereinrichtung 5 um eine Drehachse D drehbar gelagert ist. Die Lagereinrichtung 5 ist in einem Lagerschild 3a des Motorgehäuses 3 angeordnet. Die Lagereinrichtung 5 ist in den in den Figuren 1 und 2 dargestellten Ausführungsbeispielen als Wälzlager, beispielsweise Kugellager, ausgebildet. Die Abtriebswelle 4 steht in dem in der Figur 1 unteren Bereich auf nicht näher dargestellte Weise mit einem Antriebsrad des Flurförderzeugs in trieblicher Verbindung, beispielsweise unter Zwischenschaltung eines Untersetzungsgetriebes. Das Untersetzungsgetriebe ist in einem Getriebegehäuse angeordnet, das an das Motorgehäuse 3 des Fahrantriebs 1 angebaut ist. Bei einem Lagertechnikflurförderzeug ist das Antriebsrad zudem lenkbar, wozu der Fahrantrieb 1 lenkbar an dem Flurförderzeug angeordnet sein kann.

Der Fahrantrieb 1 umfasst weiterhin eine Federspeicherbremseinrichtung 10, die auf die Abtriebswelle 4 des Elektromotors 1 wirkt. Die Federspeicherbremseinrichtung 10 weist die Funktion einer Feststellbremse auf, mit der das Flurförderzeug im Stillstand arretiert werden kann.

Die Federspeicherbremseinrichtung 10 weist einen mit der Abtriebswelle 4 drehfest verbundenen Bremsrotor 11, beispielsweise eine Bremsscheibe, und eine axial verschiebbare Druckplatte 12 auf. Die Druckplatte 12 ist im Motorgehäuse 3 drehfest befestigt und axial verschiebbar angeordnet. Die Druckplatte 12 ist von einer Federeinrichtung 13 in Richtung einer Bremsstellung der Federspeicherbremseinrichtung 10 beaufschlagt und von einer der Federeinrichtung entgegenwirkenden Lüfteinrichtung 14 in Richtung einer Lösestellung der Federspeicherbremseinrichtung 10 beaufschlagt.

Erfindungsgemäß ist die Federspeicherbremseinrichtung 10 in den Lagerschild 3a und somit in das Motorgehäuse 3 des Fahrantriebs 1 eingebaut.

Die Federspeicherbremseinrichtung 10 weist hierzu einen Bremsstator 15 auf, an die der Bremsrotor 11 mittels der axial verschiebbaren Druckplatte 12 beaufschlagbar ist. Der Bremsstator 15 ist als Abschlussdeckel des Lagerschildes 3a und somit des Motorgehäuses 3 ausgebildet, im dargestellten Ausführungsbeispiel als oberer Abschlussdeckel des Lagerschildes 3a.

Im Ausführungsbeispiel der Figur 1 ist zwischen dem Bremsstator 15 und dem Lagerschild 3a ein von Anlageflächen gebildeter Flansch 17 ausgebildet und der Bremsstator 15 mittels einer Verschraubung 18 an dem Lagerschild 3a befestigt, die von mehreren Befestigungsschrauben gebildet ist.

Der Bremsrotor 11 ist - in axialer Richtung der Drehachse D gesehen - zwischen der Druckplatte 12 und dem Bremsstator 15 angeordnet und axial verschiebbar auf der Abtriebswelle 4 des Elektromotors 2 angeordnet. Zur drehfesten und axial verschiebbaren Anordnung des Bremsrotors 11 auf der Abtriebswelle 4 kann eine entsprechende Welle-Nabe-Verbindung 16 vorgesehen werden, beispielsweise eine Keilwellenverbindung.

Zwischen der Druckplatte 12 und dem Bremsrotor 11 ist ein Bremsbelag 26 angeordnet. Der Bremsbelag 26 kann an der Druckplatte 12 oder alternativ an dem Bremsrotor 11 befestigt sein. Zwischen dem Bremsrotor 11 und dem Bremsstator 15 ist ein weiterer Bremsbelag 27 angeordnet. Der Bremsbelag 27 kann an dem Bremsstator 15 oder alternativ an dem Bremsrotor 11 befestigt sein.

Der Lagerschild 3a weist zur Aufnahme der Druckplatte 12 und des Bremsrotors 11 einen Aufnahmeraum 20 auf, in dem die axial verschiebbare Druckplatte 12 und der axial verschiebbare Bremsrotor 11 angeordnet und eingebaut sind. Der Aufnahmeraum 20 wird von dem als Abschlussdeckel ausgebildeten Bremsstator 15 verschlossen.

Weiterhin sind die Lüfteinrichtung 14 und die Federeinrichtung 13 im Lagerschild 3a des Elektromotors 2 angeordnet und eingebaut.

In den in den Figuren 1 und 2 dargestellten Ausführungsbeispielen ist die Federspeicherbremseinrichtung 10 als elektrisch lösbare Federspeicherbremse ausgebildet ist, wobei die Lüfteinrichtung 14 als Elektromagnet 21 und die Druckplatte 12 als Ankerplatte 22 ausgebildet ist. Der Elektromagnet 21 umfasst eine Spule, die in einer Ringnut 23 des Lagerschildes 3a angeordnet ist.

Die Federeinrichtung 13 ist in den in den Figuren 1 und 2 dargestellten Ausführungsbeispielen von mehreren konzentrisch zur Abtriebswelle 4 angeordneten Druckfedern 24 gebildet, wobei der Lagerschild 3a für jede Druckfeder 24 mit einer Aufnahmebohrung 25 versehen ist.

In dem Ausführungsbeispiel der Figur 1 ist an dem Lagerschild 3a ein Aufnehmer 30 eines Drehzahlsensors angeordnet, der mit einer Markierung 31 des Bremsrotors 11 zusammenwirkt. Die Markierung 31 des Bremsrotors 11 ist beispielsweise von einer am Außenumfang des Bremsrotors 11 ausgebildeten Verzahnung gebildet, auf die der Aufnehmer 30, beispielsweise ein induktiver Aufnehmer, ausgerichtet ist.

In der Figur 2 ist ein zweites Ausführungsbeispiel eines erfindungsgemäßen Fahrantriebs 1 dargestellt.

Bei der Figur 2 ist an der Außenfläche und somit in einer Seitenwand des Lagerschildes 3a im Bereich des Bremsrotors 11 eine Wartungsöffnung 35 ausgebildet. Über die Wartungsöffnung 35 wird es ermöglicht, den Verschleiß des in dem Lagerschild 3a angeordneten Bremsrotors 11 und den Luftspalt der Federspeicherbremseinrichtung 10 zu ermitteln. Die Wartungsöffnung 35 ist bevorzugt von einem bohrungsförmigen oder schlitzförmigen Fenster in der Außenfläche des Lagerschildes 3a gebildet.

Bei der Figur 2 ist zwischen dem Lagerschild 3a und dem Bremsstator 15 ein Gewinde 36 ausgebildet, mittels dem der als Abschlussdeckel ausgebildete Bremsstator 15 auf den Lagerschild 3a aufschraubbar ist. Das Gewinde 36 ist von einem Innengewinde an einer Innenkante des Lagerschildes 3a und einem Außengewinde am Außenumfang des Bremsstators 15 gebildet. Durch entsprechendes Einschrauben des Bremsstators 15 in den Lagerschild 3a mittels des Gewindes 36 wird es auf einfache Weise möglich, bei einem Verschleiß des Bremsrotors 11 den Bremsstator 15 nachzustellen, um den Verschleiß des Bremsrotors 11 zu kompensieren bzw. den Luftspalt der Federspeicherbremseinrichtung 10 einzustellen.

An der Oberseite des Bremsstators 15 kann hierzu eine Mutter 37 angeordnet werden, so dass es mit einem entsprechenden Werkzeug auf einfache Weise ermöglicht wird, den Bremsstator 15 über das Gewinde 36 in den Lagerschild 3a einzuschrauben.

Die Erfindung weist eine Reihe von Vorteilen auf.

Bei dem erfindungsgemäßen Fahrantrieb 1 drückt in der Bremsstellung der Federspeicherbremseinrichtung 10 die Federeinrichtung 13 über die Druckplatte 12 den axial verschiebbaren Bremsrotor 11 nach oben in Anlage an den am Lagerschild 3a befestigten und als Abschlussdeckel des Lagerschildes 3a ausgebildeten Bremsstator 15, so dass die von der Federeinrichtung 13 erzeugte Bremskraft über den Bremsstator 15 direkt in das Motorgehäuse 3 eingeleitet wird. Die Lagereinrichtung 5 im Lagerschild 3a ist somit nicht von der Bremskraft der Federeinrichtung 13 beaufschlagt.

Durch den erfindungsgemäßen Einbau der Federspeicherbremseinrichtung 10 in den Lagerschild 3a, bevorzugt in den oberen Lagerschild, und somit in das Motorgehäuse 3 des Fahrantriebs 1 wird ein in axialer Richtung kompakter Aufbau des Fahrantriebs 1 erzielt.

Weiterhin führt der erfindungsgemäßen Einbau der Federspeicherbremseinrichtung 10 in den Lagerschild 3a und somit in das Motorgehäuse 3 des Fahrantriebs 1 zu einem geringen Bauaufwand, da die Federspeicherbremseinrichtung 10 kein eigenes Gehäuse benötigt, das am Motorgehäuse 3 befestigt werden muss.

Durch entsprechende Ausbildung des Bremsrotors 11 mit einer Markierung für einen Aufnehmer 30 eines Drehzahlsensors kann ein Drehzahlsensor in bauraumsparender Weise und mit geringem zusätzlichen Bauaufwand zur Verfügung gestellt werden, da der Bremsrotor 11 die Funktion des Sensorrades des Drehzahlsensors aufweist und kein eigenes Sensorrad für den Drehzahlsensor erforderlich ist.

Durch die Wartungsöffnung 35 und die Nachstellbarkeit der Federspeicherbremseinrichtung 10 mittels des Gewindes 36 wird eine einfache Kontrolle des Verschleißes und des Luftspaltes der im Lagerschild 3a eingebauten Federspeicherbremseinrichtung 10 und somit eine einfache Wartung und eine einfache Nachstellung der Federspeicherbremseinrichtung 10 erzielt.

Zudem wird es ermöglicht, die zu dem Elektromotor 1 geführten elektrischen Verbindungskabel und das zu dem Elektromagnet 21 geführte Verbindungskabel an einem gemeinsamen Steckeranschluss am Motorgehäuse 3 zusammenzufassen. Hierdurch wird eine hohe Betriebssicherheit erzielt, da die elektrischen Verbindungskabel für den Elektromotor 2 und für die Federspeicherbremseinrichtung 10 vor Beschädigungen geschützt zu dem Steckeranschluss am Motorgehäuse 3 geführt werden können.

Die Erfindung ist nicht auf die in den Figuren 1 und 2 dargestellten Ausführungsbeispiele beschränkt. Es versteht sich, dass beispielsweise bei der Figur 2 die Funktion des Drehzahlsensors gemäß der Figur 1 mit dem Aufnehmer 30 und der Markierung 31 an dem Bremsrotor 11 zusätzlich vorgesehen werden kann.

## Patentansprüche

1. Fahrantrieb (1) eines Flurförderzeugs mit einem Elektromotor (2), der in einem Motorgehäuse (3) des Fahrantriebs (1) angeordnet ist und eine Abtriebswelle (4) aufweist, und mit einer Federspeicherbremseinrichtung (10), die auf die Abtriebswelle (4) des Elektromotors (2) wirkt, wobei die Federspeicherbremseinrichtung (10) einen mit der Abtriebswelle (4) drehfest verbundenen Bremsrotor (11) aufweist und eine axial verschiebbare Druckplatte (12) aufweist, wobei die Druckplatte (12) von einer Federeinrichtung (13) in Richtung einer Bremsstellung der Federspeicherbremseinrichtung (10) und von einer der Federeinrichtung (13) entgegenwirkenden Lüfteinrichtung (14) in Richtung einer Lösestellung der Federspeicherbremseinrichtung (10) beaufschlagt ist, wobei die Abtriebswelle (4) in einem Lagerschild (3a) des Motorgehäuses (3) mittels einer Lagereinrichtung (5) drehbar gelagert ist und die Federspeicherbremseinrichtung (10) einen Bremsstator (15) aufweist, gegen den der Bremsrotor (11) mittels der axial verschiebbaren Druckplatte (12) beaufschlagbar ist, wobei der Bremsrotor (11) zwischen der Druckplatte (12) und dem Bremsstator (15) angeordnet ist, **dadurch gekennzeichnet, dass** der Bremsrotor (11) axial verschiebbar auf der Abtriebswelle (4) des Elektromotors (2) angeordnet ist und die Federspeicherbremseinrichtung (10) in den Lagerschild (3a) des Motorgehäuses (3) eingebaut ist, wobei der Bremsstator (15) als Abschlussdeckel des Lagerschildes (3a) ausgebildet ist, wobei die Lüfteinrichtung (14), die Federeinrichtung (13), die Druckplatte (12) und der Bremsrotor (11) im Lagerschild (3a) des Motorgehäuses (3) angeordnet sind.

2. Fahrantrieb nach Anspruch 1, **dadurch gekennzeichnet, dass** der Lagerschild (3a) einstückig mit dem Motorgehäuse (3) ausgebildet ist.

3. Fahrantrieb nach Anspruch 1, **dadurch gekennzeichnet, dass** der Lagerschild (3a) an dem Motorgehäuse (3) befestigt ist.

4. Fahrantrieb nach einem der Ansprüche 1 bis 3, **dadurch gekennzeichnet, dass** die Federspeicherbremseinrichtung (10) als elektrisch lösbare Federspeicherbremse ausgebildet ist, wobei die Lüfteinrichtung (14) als Elektromagnet (21) und die Druckplatte (12) als Ankerplatte (22) ausgebildet ist.

5. Fahrantrieb nach Anspruch 4, **dadurch gekennzeichnet, dass** der Lagerschild (3a) mit einer Ringnut (23) versehen ist, in der eine Spule des Elektromagnet (21) angeordnet ist.

6. Fahrantrieb nach einem der Ansprüche 1 bis 5, **dadurch gekennzeichnet, dass** die Federeinrichtung (13) mehrere konzentrisch zur Abtriebswelle (4) angeordnete Druckfedern (24) aufweist, wobei der Lagerschild (3a) für jede Druckfeder (24) mit einer Aufnahmebohrung (25) versehen ist.

7. Fahrantrieb nach einem der Ansprüche 1 bis 6, **dadurch gekennzeichnet, dass** der Bremsstator (15) an dem Lagerschild (3a) mittels einer Verschraubung (18) befestigt ist.

8. Fahrantrieb nach einem der Ansprüche 1 bis 6, **dadurch gekennzeichnet, dass** zwischen dem Lagerschild (3a) und dem Bremsstator (15) ein Gewinde (36) ausgebildet ist, mittels dem der Bremsstator (15) auf den Lagerschild (3a) aufschraubbar ist.

9. Fahrantrieb nach einem der Ansprüche 1 bis 8, **dadurch gekennzeichnet, dass** an dem Lagerschild (3a) ein Aufnehmer (30) eines Drehzahlsensors angeordnet ist, der mit einer Markierung (31) des Bremsrotors (11) zusammenwirkt.

10. Fahrantrieb nach einem der Ansprüche 1 bis 9, **dadurch gekennzeichnet, dass** an der Außenfläche des Lagerschildes (3a) im Bereich des Bremsrotors (11) eine Wartungsöffnung (35) zur Ermittlung des Verschleißes des Bremsrotors (11) ausgebildet ist.

11. Fahrantrieb nach einem der Ansprüche 1 bis 10, **dadurch gekennzeichnet, dass** die Federspeicherbremseinrichtung (10) als Feststellbremse des Flurförderzeugs ausgebildet ist.

12. Fahrantrieb nach einem der Ansprüche 1 bis 11, **dadurch gekennzeichnet, dass** das Flurförderzeug als Lagertechnikflurförderzeug ausgebildet ist.

## Claims

1. Traction drive (1) of an industrial truck with an electric motor (2) which is arranged in a motor housing (3) of the traction drive (1) and has an output shaft (4), and with a spring-loaded braking device (10) which acts on the output shaft (4) of the electric motor (2), wherein the spring-loaded braking device (10) has a brake rotor (11), which is connected to the output shaft (4) for rotation therewith, and an axially displaceable pressure plate (12), wherein the pressure plate (12) is acted upon by a spring device (13) in the direction of a braking position of the spring-loaded braking device (10) and by a ventilating device (14), which acts counter to the spring device (13), in the direction of a release position of the spring-loaded braking device (10), wherein the output shaft (4) is mounted rotatably in an end shield (3a) of the motor housing (3) by means of a bearing device (5), and the spring-loaded braking device (10) has a brake stator (15), against which the brake rotor (11) can be applied by means of the axially displaceable pressure plate (12), wherein the brake rotor (11) is arranged between the pressure plate (12) and the brake stator (15), **characterized in that** the brake rotor (11) is arranged in an axially displaceable manner on the output shaft (4) of the electric motor (2) and the spring-loaded braking device (10) is fitted into the end shield (3a) of the motor housing (3), wherein the brake stator (15) is configured as a closure cover of the end shield (3a), wherein the ventilating device (14), the spring device (13), the pressure plate (5) and the brake rotor (11) are arranged in the end shield (3a) of the motor housing (3) .

2. Traction drive according to Claim 1, **characterized in that** the end shield (3a) is configured integrally with the motor housing (3).

3. Traction drive according to Claim 1, **characterized in that** the end shield (3a) is fastened to the motor housing (3).

4. Traction drive according to one of Claims 1 to 3, **characterized in that** the spring-loaded braking device (10) is configured as an electrically releasable spring-loaded brake, wherein the ventilating device (14) is configured as an electromagnet (21) and the pressure plate (12) as an armature plate (22) .

5. Traction drive according to Claim 4, **characterized in that** the end shield (3a) is provided with an annular groove (23) in which a coil of the electromagnet (21) is arranged.

6. Traction drive according to one of Claims 1 to 5, **characterized in that** the spring device (13) has a plurality of compression springs (24) arranged concentrically with respect to the output shaft (4), wherein the end shield (3a) is provided with a receiving bore (25) for each compression spring (24) .

7. Traction drive according to one of Claims 1 to 6, **characterized in that** the brake stator (15) is fastened to the end shield (3a) by means of a screw connection (18).

8. Traction drive according to one of Claims 1 to 6, **characterized in that** a thread (36) which can be used to screw the brake stator (15) onto the end shield (3a) is configured between the end shield (3a) and the brake stator (15).

9. Traction drive according to one of Claims 1 to 8, **characterized in that** a transducer (30) of a rotational speed sensor, which interacts with a marking (31) of the brake rotor (11), is arranged on the end shield (3a).

10. Traction drive according to one of Claims 1 to 9, **characterized in that** a maintenance opening (35) for determining the wear of the brake rotor (11) is configured on the outer surface of the end shield (3a) in the region of the brake rotor (11).

11. Traction drive according to one of Claims 1 to 10, **characterized in that** the spring-loaded braking device (10) is configured as a parking brake of the industrial truck.

12. Traction drive according to one of Claims 1 to 11, **characterized in that** the industrial truck is configured as an industrial truck for storage techniques.

## Revendications

1. Entraînement de conduite (1) d'un chariot de manutention comprenant un moteur électrique (2) qui est disposé dans un carter moteur (3) de l'entraînement de conduite (1) et qui présente un arbre de sortie (4), et comprenant un dispositif de freinage à ressort accumulateur (10) qui agit sur l'arbre de sortie (4) du moteur électrique (2), le dispositif de freinage à ressort accumulateur (10) présentant un rotor de frein (11) connecté de manière solidaire en rotation à l'arbre de sortie (4) et présentant une plaque de pression déplaçable axialement (12), la plaque de pression (12) étant sollicitée par un dispositif à ressort (13) dans la direction d'une position de freinage du dispositif de freinage à ressort accumulateur (10) et par un dispositif releveur (14) s'opposant au dispositif à ressort (13) dans la direction d'une position de desserrage du dispositif de freinage à ressort accumulateur (10), l'arbre de sortie (4) étant supporté à rotation dans un flasque de palier (3a) du carter moteur (3) au moyen d'un système de palier (5) et le dispositif de freinage à ressort accumulateur (10) présentant un stator de frein (15) contre lequel le rotor de frein (11) peut être sollicité au moyen de la plaque de pression déplaçable axialement (12), le rotor de frein (11) étant disposé entre la plaque de pression (12) et le stator de frein (15), **caractérisé en ce que** le rotor de frein (11) est disposé de manière déplaçable axialement sur l'arbre de sortie (4) du moteur électrique (2), et le dispositif de freinage à ressort accumulateur (10) est incorporé dans le flasque de palier (3a) du carter moteur (3), le stator de frein (15) étant réalisé sous forme de couvercle de terminaison du flasque de palier (3a) le dispositif releveur (14), le dispositif à ressort (13), la plaque de pression (12) et le rotor de frein (11) étant disposés dans le flasque de palier (3a) du carter moteur (3).

2. Entraînement de conduite selon la revendication 1, **caractérisé en ce que** le flasque de palier (3a) est réalisé d'une seule pièce avec le carter moteur (3).

3. Entraînement de conduite selon la revendication 1, **caractérisé en ce que** le flasque de palier (3a) est fixé au carter moteur (3).

4. Entraînement de conduite selon l'une quelconque des revendications 1 à 3, **caractérisé en ce que** le dispositif de freinage à ressort accumulateur (10) est réalisé sous forme de frein à ressort accumulateur desserrable électriquement, le dispositif releveur (14) étant réalisé sous forme d'électroaimant (21) et la plaque de pression (12) étant réalisée sous forme de plaque d'induit (22).

5. Entraînement de conduite selon la revendication 4, **caractérisé en ce que** le flasque de palier (3a) est pourvu d'une rainure annulaire (23) dans laquelle est disposée une bobine de l'électroaimant (21).

6. Entraînement de conduite selon l'une quelconque des revendications 1 à 5, **caractérisé en ce que** le dispositif à ressort (13) présente plusieurs ressorts de compression (24) disposés concentriquement par rapport à l'arbre de sortie (4), le flasque de palier (3a) étant pourvu d'un alésage de réception (25) pour chaque ressort de compression (24).

7. Entraînement de conduite selon l'une quelconque des revendications 1 à 6, **caractérisé en ce que** le stator de frein (15) est fixé sur le flasque de palier (3a) au moyen d'un vissage (18).

8. Entraînement de conduite selon l'une quelconque des revendications 1 à 6, **caractérisé en ce qu'**entre le flasque de palier (3a) et le stator de frein (15) est réalisé un filetage (36) au moyen duquel le stator de frein (15) peut être vissé sur le flasque de palier (3a).

9. Entraînement de conduite selon l'une quelconque des revendications 1 à 8, **caractérisé en ce qu'**un transducteur (30) d'un capteur de vitesse est disposé sur le flasque de palier (3a), lequel coopère avec un marquage (31) du rotor de frein (11) .

10. Entraînement de conduite selon l'une quelconque des revendications 1 à 9, **caractérisé en ce qu'**une ouverture d'entretien (35) pour déterminer l'usure du rotor de frein (11) est réalisée sur la surface extérieure du flasque de palier (3a) dans la région du rotor de frein (11).

11. Entraînement de conduite selon l'une quelconque des revendications 1 à 10, **caractérisé en ce que** le dispositif de freinage à ressort accumulateur (10) est réalisé sous forme de frein de stationnement du chariot de manutention.

12. Entraînement de conduite selon l'une quelconque des revendications 1 à 11, **caractérisé en ce que** le chariot de manutention est réalisé sous forme de chariot de manutention pour technique de stockage.
